# EUROPEAN PATENT APPLICATION

(11) **EP 4 527 536 A1**
(43) Date of publication of application: **26.03.2025**
(21) Application number: 23807253.2
(22) Date of filing: 07.03.2023
(51) Int. Cl.: B23K 9/12

(54) **WELDING SYSTEM**

(30) Priority: 18.05.2022 JP 2022081791
(71) Applicant: Panasonic Intellectual Property Management Co., Ltd., Kadoma-shi, Osaka 571-0057 (JP)
(72) Inventor: FUKUMITSU, Yoichi, Kadoma-shi, Osaka 571-0057 (JP); KAWAMOTO, Atsuhiro, Kadoma-shi, Osaka 571-0057 (JP); MATSUI, Kaito, Kadoma-shi, Osaka 571-0057 (JP); FUJIWARA, Junji, Kadoma-shi, Osaka 571-0057 (JP); NISHIMURA, Hitoshi, Kadoma-shi, Osaka 571-0057 (JP); FURUYAMA, Yuya, Kadoma-shi, Osaka 571-0057 (JP)
(74) Representative: Novagraaf International SA
(86) International application number: PCT/JP2023/008572
(87) International publication number: WO 2023/223637

(57) **Abstract**

A welding system includes a tip that biases a welding wire and has a forced power supply mechanism for supplying power to the welding wire at a distal end, a torch including the tip at a distal end, the torch supplying the welding wire toward a welded portion, an automatic machine that holds the torch, and a welding wire straightener attached to the automatic machine, the welding wire straightener correcting a bending tendency of the welding wire.

## Description

### TECHNICAL FIELD

The present disclosure relates to a welding system.

### BACKGROUND ART

PTL 1 discloses a welding tip for welding a molten electrode type gas shielded arc in which an insulating guide is provided at a distal end portion of a power supply tip. The welding tip for welding a molten electrode gas shielded arc includes a power supply tip, an insulating guide positioned on a distal end side of the power supply tip, and a guide holder detachably coupled to the distal end portion of the power supply tip. The power supply tip is detachably coupled to a distal end portion of a welding torch body, and supplies a current to a welding wire passing through a welding wire insertion hole formed at a center portion. The insulating guide guides the welding wire having passed through the power supply tip toward a material to be welded, and maintains a long projecting length of the welding wire from the power supply tip. The guide holder holds the insulating guide on the distal end side of the power supply tip.

### Citation List

### Patent Literature

PTL 1: Unexamined Japanese Patent Publication No. 2003-112261

### SUMMARY OF THE INVENTION

### Technical problem

The present disclosure provides a welding system that more effectively suppresses a target deviation of a welded portion even though a welding wire projecting length is increased.

### Solution to problem

The present disclosure provides a welding system including a tip that biases a welding wire and has a forced power supply mechanism for supplying power to the welding wire at a distal end, a torch including the tip at a distal end, the torch supplying the welding wire toward a welded portion, an automatic machine that holds the torch, and a welding wire straightener attached to the automatic machine, the welding wire straightener correcting a bending tendency of the welding wire.

### Advantageous effect of invention

According to the present disclosure, even though the welding wire projecting length is increased, it is possible to more effectively suppress the target deviation of the welded portion.

### BRIEF DESCRIPTION OF THE DRAWINGS

Fig. 1 is an external side view of a welding robot according to a first exemplary embodiment.
Fig. 2 is a perspective view of a main part of the welding robot in which a second feeding path is bent.
Fig. 3 is a perspective view of a connection unit.
Fig. 4 is a perspective view of the connection unit from which a cover member is removed.
Fig. 5 is a diagram for explaining a bending release structure of a flexible conduit in a second feeding path by the connection unit.
Fig. 6 is a plan view of a second connection portion.
Fig. 7 is a sectional view taken along line A-A illustrated in Fig. 6.
Fig. 8 is a perspective view of a main part of the second connection portion.
Fig. 9 is a plan view of a first connection portion.
Fig. 10 is an enlarged plan view of the first connection portion.
Fig. 11 is a perspective view of a main part illustrating an example of a bearing mechanism.
Fig. 12 is an enlarged view of a main part of a torch neck.
Fig. 13 is a correlation table of a bending angle and a bending radius of the torch neck in which a radius of curvature Φ is more than or equal to 1200.
Fig. 14 is an external side view of a welding robot according to a modification of the first exemplary embodiment.
Fig. 15 is a principle diagram of HEAT welding.
Fig. 16 is a diagram for explaining an example of a target deviation of a welded portion.

### DESCRIPTION OF EMBODIMENT

### (Background leading to the present disclosure)

In an arc welding method of related art, a welding robot holds a distance (projecting length of the welding wire) between a power supply tip and a welding wire to be longer than usual, and increases Joule heat applied to the welding wire in proportion to the projecting length. Thus, the amount of melting of a welding wire is increased even at the same welding current. However, a welding wire wound around a pack, a spool, or the like has a curling tendency and has a predetermined curvature. Thus, in the welding robot, when the projecting length of the welding wire is increased, a positional deviation (target deviation) of a welded portion sometimes increases due to the curling tendency of the welding wire itself.

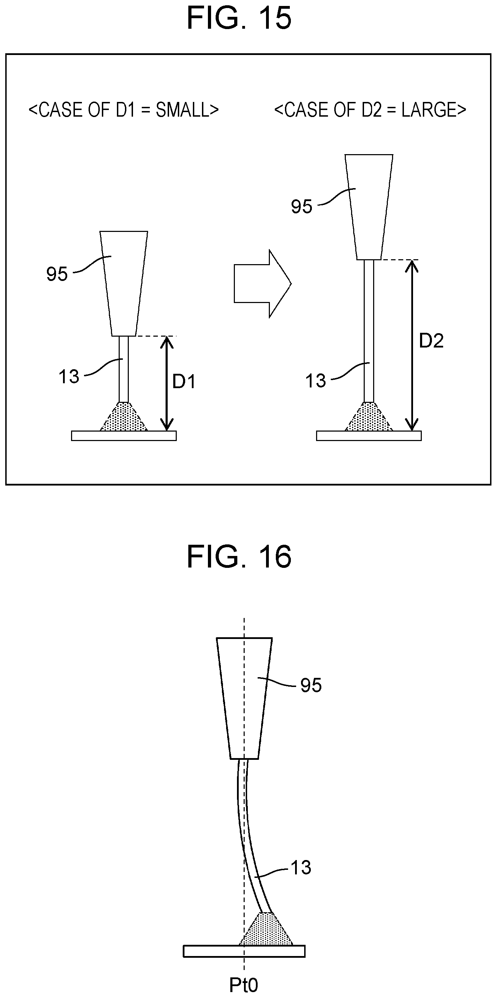

In addition, in the related art, there is a welding robot that performs HEAT welding in which an insulating guide using a ceramic material is provided at a distal end of the power supply tip to suppress the positional deviation of the welded portion. Hereinafter, the HEAT welding performed by the welding robot including the insulating guide will be described with reference to Figs. 15 and 16.

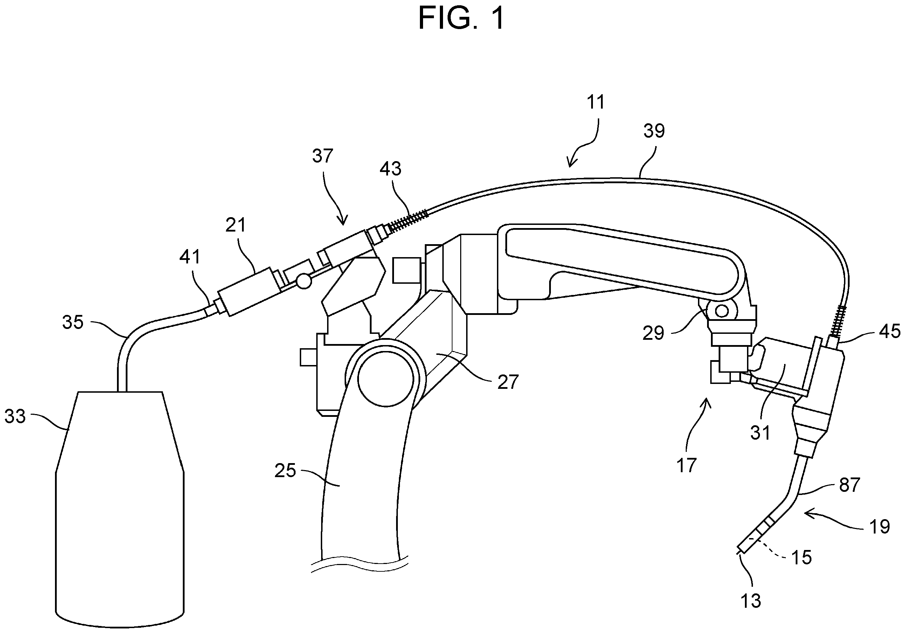

Fig. 15 is a principle diagram of the HEAT welding. Note that, in tip 95 illustrated in Fig. 15, illustration of forced power supply tip 15 (see Fig. 1) is omitted for easy understanding of description.

The HEAT welding can increase the amount of welding of welding wire 13 by increasing the amount of heat (Joule heat) applied to welding wire 13 at the same current value. A calculation expression of Joule heat W is W = I₀ × V₀ = I₀ × (I₀ • R₀) = I₀² × R₀.

The welding robot that performs the HEAT welding can increase the amount of melting of welding wire 13 by increasing the Joule heat applied to welding wire 13 by resistance value R₀ that increases in proportion to projecting lengths D1 and D2 of welding wire 13, and can increase welding efficiency. As illustrated in Fig. 15, resistance value R₀ of welding wire 13 is larger in projecting length D2 than in projecting length D1. However, since the projecting length is large as illustrated in Fig. 16, such a welding robot has a problem that the positional deviation (target deviation) of the welded portion increases. Therefore, in the related rat, the insulating guide is provided at the distal end of the tip, and thus, the welding robot further reduces the target deviation caused by a bending tendency of welding wire 13.

Fig. 16 is a diagram for explaining an example of the target deviation of the welded portion. Note that, in tip 95 illustrated in Fig. 16, illustration of forced power supply tip 15 (see Fig. 1) is omitted for easy understanding of description.

Position Pt0 indicates the welded portion. As illustrated in Fig. 16, even though the welding robot performs welding by adjusting a position of tip 95 according to the welded portion (position Pt0), the positional deviation (target deviation) of the welded portion may occur due to the bending tendency of welding wire 13.

Further, the insulating guide is formed using a ceramic material in order to improve heat resistance during welding. Thus, the tip including the insulating guide has a problem that material cost is high, or the welding wire softened by power supply is clogged or fused in an inner diameter portion of the insulating guide.

Hereinafter, an exemplary embodiment in which a welding system according to the present disclosure is specifically disclosed will be described below in detail with reference to the drawings as appropriate. It is noted that a more detailed description than need may be omitted. For example, a detailed description of a well-known matter and a repeated description of substantially an identical configuration may be omitted. This is to avoid the unnecessary redundancy in the following description and to make the description easier to understand for those skilled in the art. Note that, the appended drawings and the following descriptions are provided for those skilled in the art to fully understand the present disclosure, and are not intended to limit the subject matter set forth in the claims in any way.

First, an outline of welding robot 11 will be described with reference to Fig. 1. Fig. 1 is an external side view of welding robot 11 according to a first exemplary embodiment.

Welding robot 11 according to the first exemplary embodiment is an example of the welding system, and includes forced power supply tip 15, torch 19, manipulator 17, and welding wire straightener 21.

Forced power supply tip 15 as an example of the tip has a forced power supply mechanism (not illustrated) that mechanically biases welding wire 13 toward a welded portion and supplies power to welding wire 13. Torch 19 includes forced power supply tip 15 at a distal end, and supplies welding wire 13 from a distal end of forced power supply tip 15 toward a welded portion on a welding base material. Manipulator 17 as an example of an automatic machine holds torch 19. Welding wire straightener 21 is attached to manipulator 17, and corrects the bending tendency of welding wire 13 supplied from wire supply source 33, which is an example of a supply source, toward a distal end of torch 19.

Welding robot 11 includes a base portion (not illustrated) installed in a production line (not illustrated), a turning portion (not illustrated) attached to an upper portion of the base portion and horizontally rotating, and manipulator 17. Manipulator 17 includes upper arm 25 attached to the turning portion to swing in a front-rear direction, forearm 27 attached to upper arm 25 to swing in an up-down direction, wrist 29 attached to forearm 27 and having a three-dimensional degree of freedom, and the like. Manipulator 17 may include automatic conveyance equipment capable of conveying welding robot 11 in addition to upper arm 25, forearm 27, wrist 29, and the like.

Welding robot 11 executes arc welding (HEAT welding) to the welding base material in a free posture by controlling a posture of torch 19 attached to wrist 29 by an operation of each portion such as the base portion, the turning portion, upper arm 25, or forearm 27.

Welding robot 11 according to the first exemplary embodiment includes welding wire feeding motor 31 in an upper portion (that is, torch 19 side) of torch 19, and welding wire straightener 21 on wire supply source 33 side. Welding wire feeding motor 31 pulls out welding wire 13 from wire supply source 33, and feeds welding wire 13 from wire supply source 33 toward the distal end of torch 19.

In addition, while welding is being executed, welding wire feeding motor 31 alternately performs, at a high speed, an operation of forward feeding (supplying) welding wire 13 toward the distal end of torch 19 and an operation of backward feeding (collecting) welding wire 13 from the distal end of torch 19.

Welding wire feeding motor 31 executes the forward and backward feeding operations of welding wire 13 at a cycle of, for example, 7 mm to 10 mm and about 140 times per second. Note that, needless to say, a stroke length, a cycle speed, and the like of welding wire 13 in the forward and backward feeding operations described above are merely examples, and the present disclosure is not limited thereto.

In torch 19 according to the first exemplary embodiment, welding is performed while welding wire 13 is fed forward and backward at a high speed by welding wire feeding motor 31. Welding robot 11 needs a feeding path (second feeding path 39) that allows a return allowance (extra length) (for example, 7 mm to 10 mm) of welding wire 13 during backward feeding.

Welding wire 13 is fed from wire supply source 33 to torch 19 through a feeding path. The feeding path includes first supply path 35 and second supply path 39. First supply path 35 connects wire supply source 33 and welding wire straightener 21. Second supply path 39 connects connection unit 37 and torch 19. Note that, in the present exemplary embodiment, the term "feeding path" is used as a generic name of first feeding path 35 and second feeding path 39.

First feeding path 35 connected to wire supply source 33 is connected to welding wire straightener 21 by first connection portion 41. Welding wire straightener 21 is connected to connection unit 37. Connection unit 37 is connected to second feeding path 39 by second connection portion 43.

Second feeding path 39 is, for example, a flexible conduit, and welding wire 13 is inserted through the flexible conduit. Second feeding path 39 is connected to each of second connection portion 43 and third connection portion 45 to constitute second feeding path 39. Note that, the flexible conduit is a guide tube through which welding wire 13 can be smoothly inserted.

Third connection portion 45 is connected to torch 19. Welding wire 13 is fed from an inside of torch 19 toward the welded portion, is melted by power supplied by the forced power supply mechanism inside torch 19, and is welded to the welding base material.

Note that, in welding robot 11 according to the first exemplary embodiment, although an example in which second feeding path 39 is the flexible conduit will be described, the entire feeding path (each of first feeding path 35 and second feeding path 39) may be flexible conduits.

Welding wire 13 is fed from the distal end of torch 19 toward the welding base material in a substantially straight state where the bending tendency is corrected by welding wire straightener 21. Welding robot 11 controls a posture of manipulator 17 to suppress bending of second feeding path 39 not to impart an excessive bending tendency to welding wire 13 passing through second feeding path 39.

Welding robot 11 controls the posture of manipulator 17 such that welding wire 13 has a bending angle of less than 180° and a bending radius of 150 mm or more in second feeding path 39. In addition, welding robot 11 includes a mechanism capable of releasing bending, twisting, and the like of second feeding path 39.

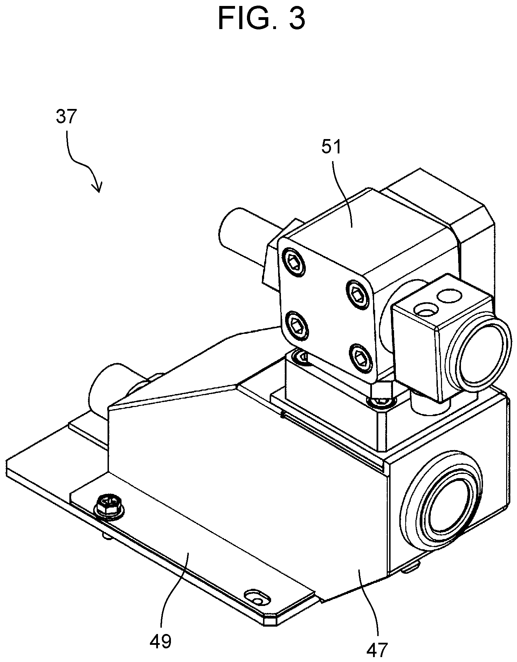

Fig. 3 is a perspective view of connection unit 37.

In connection unit 37, base plate 49 of base block 47 is fixed to manipulator 17. In base block 47, second connection portion 43 (see Fig. 1) as an example of a connection portion is covered with cover member 51 and is supported by a mechanism such as a bearing that sets the connection portion to be rotatable.

Note that, as illustrated in Fig. 1, welding wire straightener 21 is connected to an upstream side in a feeding direction of welding wire 13 of connection unit 37. In addition, second feeding path 39 is connected to a downstream side of second connection portion 43 in the feeding direction of welding wire 13.

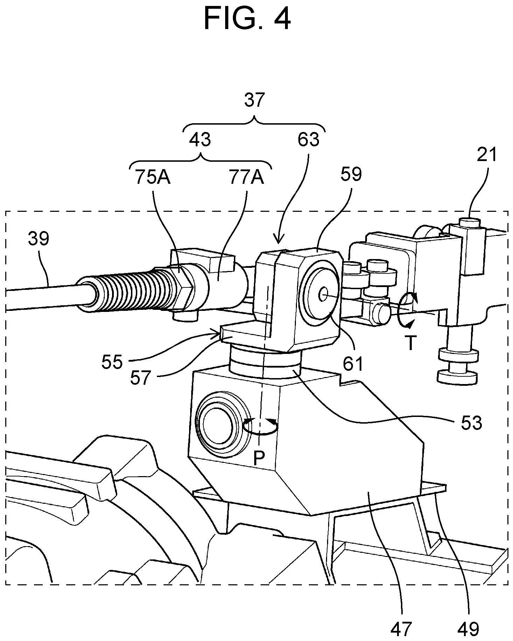

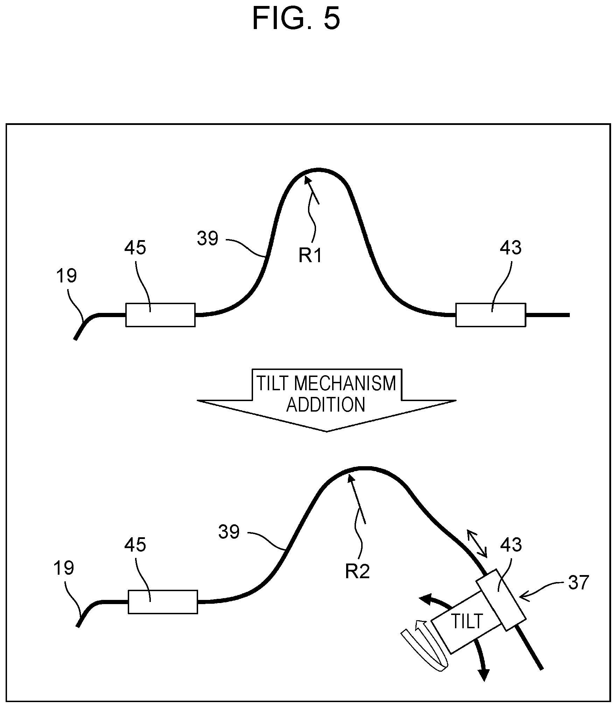

Next, a release mechanism of welding wire 13 in second feeding path 39 by connection unit 37 will be described with reference to Figs. 4 and 5. Fig. 4 is a perspective view of connection unit 37 from which cover member 51 is removed. Fig. 5 is a diagram for explaining a bending release structure of the flexible conduit in second feeding path 39 by connection unit 37.

Connection unit 37 includes second connection portion 43 and unit body 63. Second connection portion 43 includes plug 75A and coupler 77A. Unit body 63 includes base block 47, pan bearing 53, pan bracket 55, and tilt bearing 61.

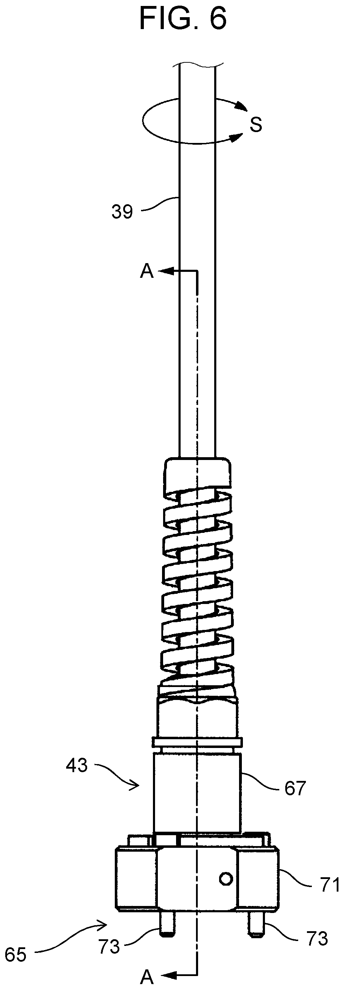

Plug 75A fixes the flexible conduit to second connection portion 43. Coupler 77A rotatably connects the flexible conduit to plug 75A in rotation direction S (see Fig. 6).

Base block 47 supports pan bracket 55 via pan bearing 53. Pan bearing 53 has a rotation center perpendicular to base plate 49, and rotatably supports pan bracket 55 in pan direction P around the rotation center.

Pan bracket 55 is supported by pan bearing 53 in horizontal plate 57 formed in a substantially L metal fitting shape. Second connection portion 43 is supported by vertical plate 59 of pan bracket 55 via tilt bearing 61. Tilt bearing 61 rotatably supports second connection portion 43 in tilt direction T around a rotation center perpendicular to the rotation center of pan bearing 53.

Pan bearing 53 and tilt bearing 61 constitute a rotating mechanism. Connection unit 37 rotatably supports second connection portion 43 of the flexible conduit in pan direction P and tilt direction T via the rotating mechanism.

Pan bearing 53 can rotate a direction of second connection portion 43 in pan direction P by rotating in pan direction P. As a result, welding robot 11 can adjust the direction of second connection portion 43 in a case where the bending angle of welding wire 13 is less than 180° and the bending radius is less than 150 mm in second feeding path 39 due to the posture of manipulator 17.

Tilt bearing 61 rotates in tilt direction T to enable the forward and backward feeding of welding wire 13 between first feeding path 35 and second feeding path 39. That is, tilt bearing 61 can control a wire length of welding wire 13 in first feeding path 35 (that is, a path length of first feeding path 35) and a wire length of welding wire 13 in second feeding path 39 (that is, a path length of second feeding path 39).

Specifically, when the flexible conduit is bent following the movement of manipulator 17, in a case where bending radius R1 is less than 150 mm, connection unit 37 is tilted by tilt bearing 61 in a direction in which the bending radius R1 of the flexible conduit is released (that is, a direction of being collected toward wire supply source 33 side). As a result, the bending radius of welding wire 13 is bending radius R2 from bending radius R1, and bending radius R2 of welding wire 13 in second feeding path 39 can be maintained at 150 mm or more.

Note that, in Fig. 5, although the example in which the welding wire is released from bending radius R1 to bending radius R2 has been described, the method for releasing welding wire 13 is not limited thereto. For example, welding robot 11 may feed welding wire 13 toward torch 19 such that a plurality of different bent portions having a bending angle of less than 180° and a bending radius of 150 mm or more are formed in welding wire 13 in second feeding path 39. In addition, in such a case, welding robot 11 may use a method for releasing the twisting of welding wire 13 using the bearing mechanism described with reference to Fig. 6 and a method for releasing the bending of welding wire 13 using tilt bearing 61 in combination.

As a result, welding robot 11 can adjust a length of welding wire 13 in second feeding path 39 by tilt bearing 61 in a case where the bending angle of welding wire 13 is less than 180° or the bending radius is less than 150 mm in second feeding path 39 by the posture of manipulator 17 or the forward and backward feeding operations of welding wire 13 by welding wire feeding motor 31. Accordingly, in welding robot 11, the bending angle of welding wire 13 is less than 180° or the bending radius is less than 150 mm in second feeding path 39, and the bending tendency of welding wire 13 can be more effectively suppressed.

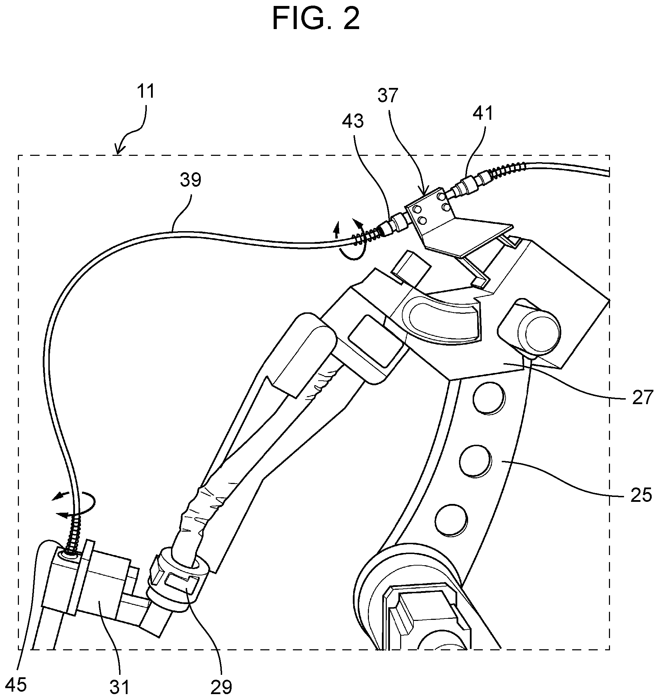

The releasing mechanism of welding wire 13 in second feeding path 39 will be described with reference to Fig. 2. Fig. 2 is a perspective view of a main part of welding robot 11 in which second feeding path 39 is bent.

Welding robot 11 includes connection unit 37 on a back surface portion of manipulator 17 (specifically, a coupling portion between upper arm 25 and forearm 27). Connection unit 37 connects first feeding path 35 and second feeding path 39. Connection unit 37 releases the bending of second feeding path 39 by holding second connection portion 43 of second feeding path 39 and rotating around an axis of the flexible conduit in accordance with the bending of second feeding path 39.

As a result, welding robot 11 releases the bending tendency of welding wire 13 in second feeding path 39, and thus, welding wire 13 can be controlled not to be bent depending on the posture of manipulator 17.

Next, a release mechanism for releasing the twisting of welding wire 13 in second feeding path 39 will be described with reference to Fig. 6. Fig. 6 is a plan view of second connection portion 43.

Welding robot 11 includes a bearing mechanism rotatable about the axis of welding wire 13, as a second mechanism for releasing the bending (twisting) of welding wire 13 in second feeding path 39. The bearing mechanism is provided, for example, in second connection portion 43 of second feeding path 39, and rotates in rotation direction S to release the twisting of welding wire 13.

As a result, in welding robot 11, the bending angle of welding wire 13 is less than 180° or the bending radius is less than 150 mm in second feeding path 39, and it is possible to more effectively suppress the bending tendency caused by the twisting of welding wire 13.

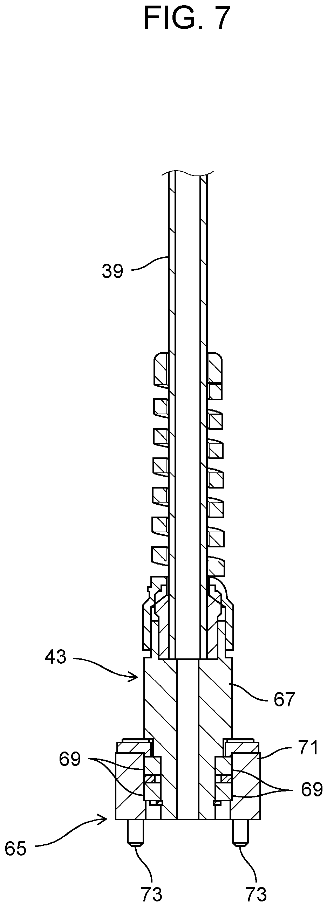

Fig. 7 is a sectional view taken along line A-A illustrated in Fig. 6.

The bearing mechanism in second connection portion 43 is realized by a ball bearing, roller bearing 65, or the like. Fig. 7 illustrates roller bearing 65 as an example. Roller bearing 65 includes inner tubular portion 67 and outer tubular portion 71 rotatably assembled to an outer diameter side of inner tubular portion 67 via a plurality of rollers 69. The flexible conduit is fixed to inner tubular portion 67. The plurality of rollers 69 are held by a retainer. Outer tubular portion 71 is fixed to connection unit 37 with screw 73.

In roller bearing 65, in a case where welding wire 13 of second feeding path 39 is twisted, inner tubular portion 67 rotates with respect to outer tubular portion 71 fixed to connection unit 37. Inner tubular portion 67 rotates in rotation direction S, and thus, the flexible conduit is twisted in rotation direction S.

As a result, welding robot 11 can release the twisting of welding wire 13 inserted through the flexible conduit of second feeding path 39.

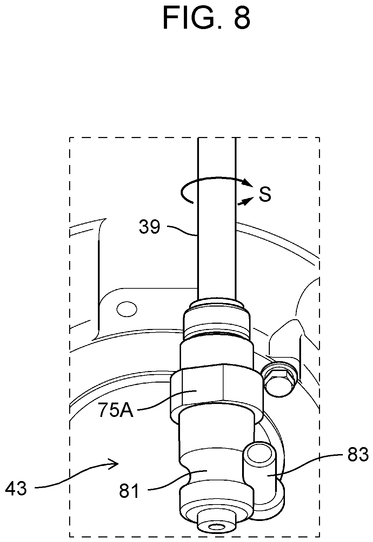

Fig. 8 is a perspective view of a main part of second connection portion 43. Note that, in second connection portion 43 illustrated in Fig. 8, an outer member covering second connection portion 43 is omitted for easy understanding of description.

Plug 75A is fixed to an end of the flexible conduit on second connection portion 43 side in second feeding path 39. Plug 75A has peripheral groove 81 formed in an outer periphery, and is inserted into connection unit 37. In connection unit 37, engagement pin 83 that engages in a direction orthogonal to the axis of welding wire 13 is fixed to peripheral groove 81. In a case where second feeding path 39 is twisted, welding robot 11 can release the twisting of second feeding path 39 by rotating plug 75A with respect to engagement pin 83 fixed to connection unit 37 by the bearing mechanism.

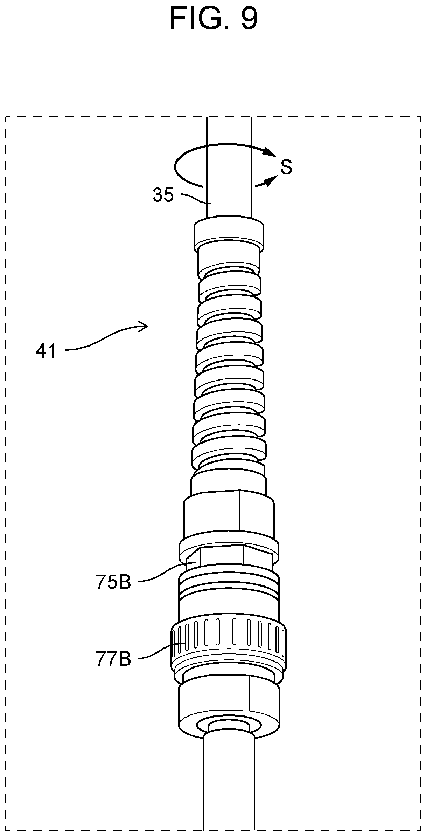

Next, a release mechanism for releasing the twisting of welding wire 13 in first feeding path 35 will be described with reference to Fig. 9. Fig. 9 is a plan view of first connection portion 41.

The bearing mechanism that rotates about the axis of welding wire 13 may be provided in first connection portion 41. The bearing mechanism is plug 75B fixed to the flexible conduit of first feeding path 35 and coupler 77B rotatably connected to plug 75.

First connection portion 41 includes the bearing mechanism, and thus, the straightening of welding wire 13 by welding wire straightener 21 can be facilitated by preventing straightness of welding wire 13 fed to welding wire straightener 21 from being lowered. Note that, since first connection portion 41 is positioned on an upstream side of welding wire straightener 21, the bearing mechanism may be omitted.

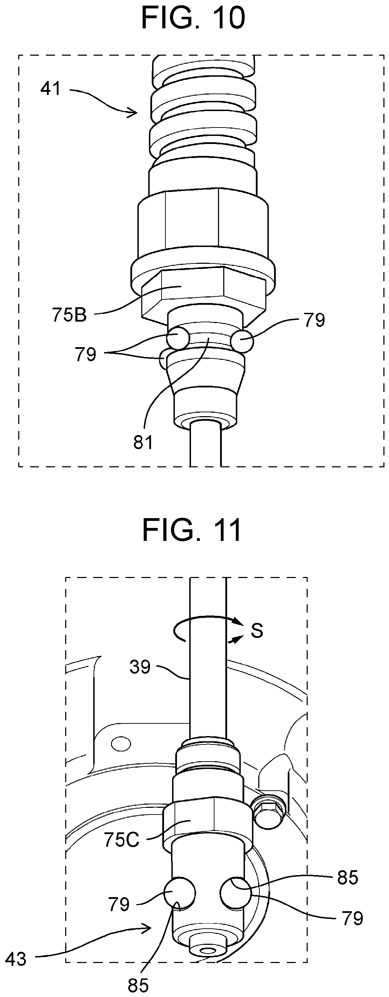

Fig. 10 is an enlarged plan view of first connection portion 41. Note that, in first connection portion 41 illustrated in Fig. 10, coupler 77B is not illustrated for easy understanding of description.

An insertion hole (not illustrated) into which plug 75B is inserted is provided in coupler 77B. Each of a plurality of balls 79 biased inward in a radial direction is held in an inner circumferential direction on an inner peripheral surface of the insertion hole. Peripheral groove 81 into which balls 79 enter is formed on an outer periphery of plug 75B. In first connection portion 41, each of balls 79 can retract outward in the radial direction by movement in a direction along an axis of coupler 77B, and plug 75B can be attached and detached.

As described above, in a case where first feeding path 35 is twisted, welding robot 11 can release the bending, twisting, and the like of first feeding path 35 by rotating plug 75B with respect to coupler 77B fixed to connection unit 37 by the bearing mechanism.

Fig. 11 is a perspective view of a main part illustrating an example of the bearing mechanism.

The bearing mechanism is not limited to the two bearing mechanisms described above, and may have other configurations. For example, the bearing mechanism illustrated in Fig. 11 includes plug 75C fixed to an end of the flexible conduit on the upstream side in the feeding direction of welding wire 13 of second feeding path 39. Plug 75C has a plurality of hemispherical recesses 85 formed on an outer peripheral surface of plug 75C. The plurality of recesses 85 are arrayed in a circumferential direction of plug 75C. Connection unit 37 includes an insertion hole for receiving plug 75C, an inner peripheral groove provided on an inner periphery of the insertion hole, and a plurality of balls 79 held in the inner peripheral groove. Each of the plurality of balls 79 can enter a corresponding one of the plurality of recesses 85 and can retract outward in the radial direction.

As described above, in a case where second feeding path 39 is twisted, welding robot 11 having the bearing mechanism illustrated in Fig. 11 can release the bending, twisting, and the like of welding wire 13 in second feeding path 39 by rolling the ball 79 engaged with plug 75 along the inner peripheral groove of connection unit 37.

Note that, each bearing mechanism described above may be applied to each of either first connection portion 41 and second connection portion 43. For example, the bearing mechanism described with reference to Figs. 6 to 8 and 11 may be applied to first connection portion 41, or may be applied to each of first connection portion 41 and second connection portion 43. Similarly, the bearing mechanism described with reference to Figs. 9 and 10 may be applied to second connection portion 43, or may be applied to each of first connection portion 41 and second connection portion 43.

As described above, welding robot 11 according to the first exemplary embodiment can release the bending, twisting, and the like of welding wire 13 by including the bearing mechanism, pan bearing 53, tilt bearing 61, or the like in connection unit 37, the connection portion, and the like. As a result, welding robot 11 can supply welding wire 13 from wire supply source 33 to torch 19 in a state where welding wire 13 is brought closer to a straight line while suppressing a decrease in straightness of welding wire 13. Accordingly, welding robot 11 more effectively suppresses the positional deviation (target deviation) of the welded portion caused by the bending tendency, the twist, and the like of welding wire 13, and enables higher quality welding to be realized.

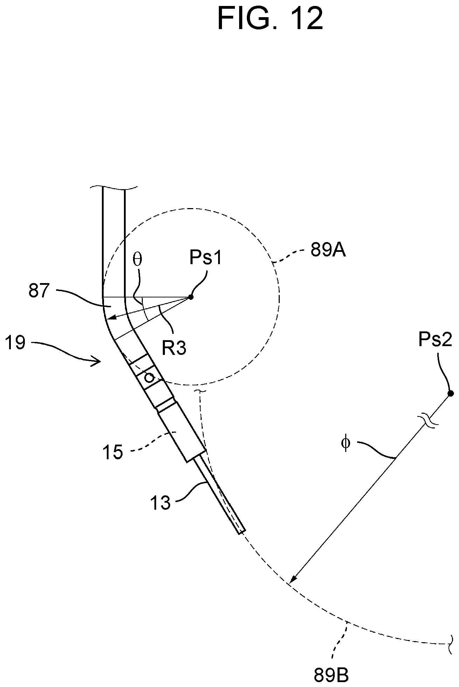

Fig. 12 is an enlarged view of a main part of torch neck 87.

Torch 19 has a bent shape on torch neck 87 to facilitate access to the welded portion. The bent shape of torch neck 87 is preferably formed to have smaller bending angle θ and larger bending radius R3 (radius of curvature) in order to suppress deformation of welding wire 13 projecting from the distal end of torch 19 toward the welded portion.

Here, welding wire 13 is generally made of a material such as mild steel or stainless used steel (SUS). Mild steel and SUS have different residual strain when an external force is applied to be bent.

In welding robot 11 according to the first exemplary embodiment, torch neck 87 has bending angle θ and bending radius R3 such that radius of curvature Φ of welding wire 13 projecting from the distal end of forced power supply tip 15 is more than or equal to 1200.

Torch neck 87 has a bent shape about position Ps1 and along curvature circle 89A having bending angle θ and bending radius R3. Welding wire 13 projects from the distal end of forced power supply tip 15 by torch neck 87 to draw curvature circle 89B about position Ps2 and having radius of curvature Φ.

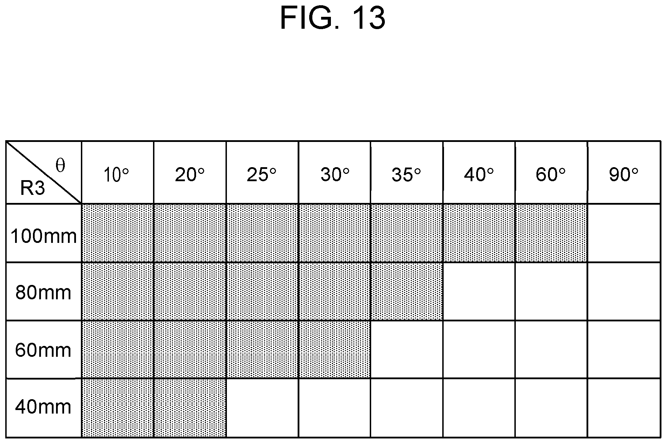

Hereinafter, bending angle θ and bending radius R3 of torch neck 87 of welding robot 11 in which radius of curvature Φ of welding wire 13 projecting from the distal end of forced power supply tip 15 is more than or equal to 1200 will be described with reference to Fig. 13.

Fig. 13 is a correlation table of bending angle θ and bending radius R3 of torch neck 87 in which radius of curvature Φ is more than or equal to 1200. Note that, the correlation table illustrated in Fig. 13 illustrates the correlation between bending angle θ and bending radius R3 in a case where a diameter of welding wire 13 is 1.2 mm.

Bending radius R3 is a radius of curvature of torch neck 87 illustrated in Fig. 12. Bending angle θ is an angle of bending performed on torch neck 87 illustrated in Fig. 12. A filled range of the correlation table indicates a range in which radius of curvature Φ of welding wire 13 projecting from the distal end of forced power supply tip 15 is more than or equal to 1200.

As illustrated in Fig. 13, torch neck 87 can realize radius of curvature Φ of welding wire 13 more than or equal to 1200 when bending angle θ is 10° to 60°, and when bending radius R3 is 100 mm. In addition, torch neck 87 can realize radius of curvature Φ of welding wire 13 more than or equal to 1200 when torch neck 87 has bending radius R3 of 40 mm, and when bending angle θ is 10° to 20°. Note that, in welding robot 11 according to the first exemplary embodiment, torch neck 87 may have bending radius R3 of 40 mm or less, or may have bending angle θ of 10° or less.

Next, an operation of welding robot 11 will be described.

When a welding work is started, welding robot 11 drives welding wire feeding motor 31 to pull out spooled or packed wound welding wire 13 from wire supply source 33 and feed the welding wire toward the distal end of torch 19. Welding wire 13 drawn from wire supply source 33 enters first feeding path 35. Welding wire 13 having entered first feeding path 35 enters welding wire straightener 21. Welding wire straightener 21 has two sets of units disposed orthogonally. Each unit has at least three rollers that pressurize drawn welding wire 13. Welding wire straightener 21 straightens welding wire 13 to be substantially straight.

Welding wire 13 straightened to be substantially straight by welding wire straightener 21 passes through connection unit 37 and enters second feeding path 39. Welding wire 13 enters torch 19 from second feeding path 39 and is fed to forced power supply tip 15 at the distal end of torch 19. Welding wire 13 fed by forced power supply tip 15 projects from forced power supply tip 15 toward the welded portion on the welding base material.

In a case where torch 19 is displaced rearward (toward wire supply source 33) due to a posture change of each portion of manipulator 17, welding robot 11 applies a force for increasing the curvature to the flexible conduit of curved second feeding path 39. Second feeding path 39 swings connection unit 37 rearward by a restoring force (reaction force), and second feeding path 39 maintains a small curvature. Since welding wire 13 is inserted through such a flexible conduit, the deformation of welding wire 13 in second feeding path 39 is suppressed. As described above, welding robot 11 can stably feed welding wire 13.

Note that, in order to realize a higher straightening effect of welding wire 13, welding wire straightener 21 is desirably attached near forced power supply tip 15. Hereinafter, the welding robot including welding wire straightener 21 above torch 19 will be described.

### (Modification of first exemplary embodiment)

A configuration example in which welding robot 11 according to the first exemplary embodiment includes welding wire feeding motor 31 above torch 19 and welding wire straightener 21 on wire supply source 33 side has been described. A configuration example in which welding robot 91 according to a modification of the first exemplary embodiment includes welding wire straightener 21 above torch 19 and includes welding wire feeding device 93 capable of realizing a function similar to welding wire feeding motor 31 on wire supply source 33 side will be described.

Note that, in the following description, identical reference marks are given to configurations similar to welding robot 11 according to the first exemplary embodiment, and thus, the description thereof will be omitted.

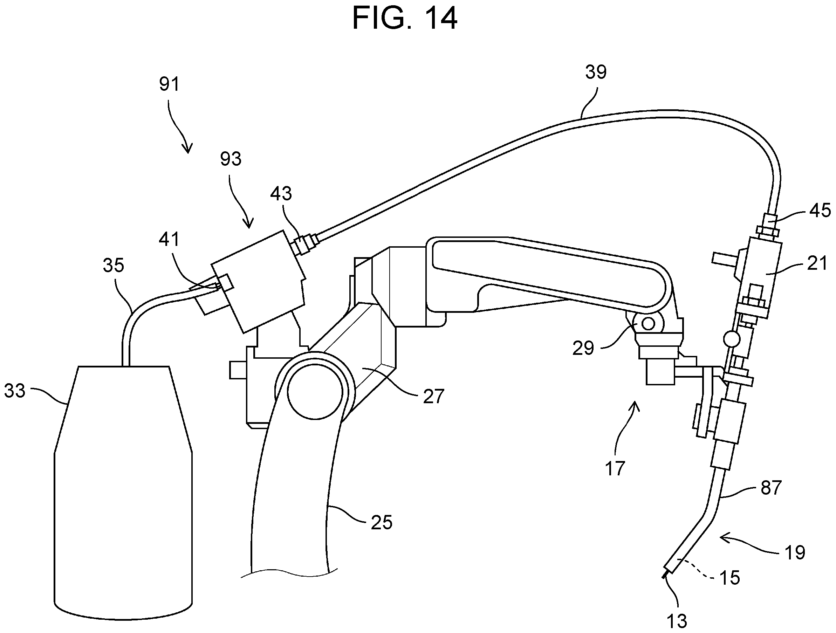

Fig. 14 is an external side view of welding robot 91 according to the modification of the first exemplary embodiment.

Welding robot 91 according to the modification of the first exemplary embodiment is an example of the welding system, and includes welding wire straightener 21 above torch 19. Welding wire 13 is fed from wire supply source 33 toward the distal end of torch 19 by welding wire feeding device 93. Welding wire feeding device 93 is fixed to a back portion of manipulator 17, and is provided between first feeding path 35 and second feeding path 39.

That is, in welding robot 91, welding wire 13 is drawn out from wire supply source 33 through first feeding path 35 by welding wire feeding device 93, enters second feeding path 39, and is fed to welding wire straightener 21. Welding wire 13 having entered welding wire straightener 21 enters nearest torch 19 without passing through the flexible conduit, is supplied with power via forced power supply tip 15 provided at the distal end of torch 19, and then projects toward the welded portion on the welding base material.

As described above, in welding robot 91 according to the modification of the first exemplary embodiment, welding wire straightener 21 is disposed in nearest torch 19. Welding wire 13 straightened to be substantially straight by welding wire straightener 21 is fed to torch 19.

As a result, since welding robot 91 can feed welding wire 13, which is more straight, from forced power supply tip 15 toward the welded portion, the positional deviation of the welded portion can be further reduced. In addition, welding robot 91 can improve welding quality by reducing the positional deviation of the welded portion.

In addition, welding robot 91 according to the modification of the first exemplary embodiment imparts a bending tendency to welding wire 13 by wire supply source 33 and a feeding path (that is, each of first feeding path 35 and second feeding path 39) from wire supply source 33 to welding wire straightener 21. However, welding wire 13 is straightened by welding wire straightener 21 disposed above torch 19, and enters torch 19. Accordingly, welding robot 91 according to the modification of the first exemplary embodiment can omit various mechanisms (bearing mechanism, pan bearing 53, tilt bearing 61, and the like) for releasing the bending of welding wire 13 on the feeding path.

As described above, each of welding robots 11 and 91 (examples of the welding system) according to the first exemplary embodiment and the modification of the first exemplary embodiment includes forced power supply tip 15 (an example of the tip) having the forced power supply mechanism that biases welding wire 13 and supplies power to welding wire 13 at the distal end, torch 19 that includes forced power supply tip 15 at the distal end and supplies welding wire 13 toward the welded portion, manipulator 17 (an example of the automatic machine) that holds torch 19, and welding wire straightener 21 that is attached to manipulator 17 and corrects the bending tendency of welding wire 13.

As a result, in each of welding robots 11 and 91 according to the first exemplary embodiment and the modification of the first exemplary embodiment, the bending tendency of welding wire 13 is corrected by welding wire straightener 21, and welding wire 13 whose bending tendency is corrected projects from forced power supply tip 15 at the distal end of torch 19 toward the welded portion. Even though the projecting length of welding wire 13 increases, the positional deviation (target deviation) of the welded portion can be further suppressed. That is, since welding robots 11 and 91 may not straighten welding wire 13 by torch 19, the insulating guide used in the torch of the related art is unnecessary. Accordingly, welding robots 11 and 91 can use inexpensive torch 19 to suppress the target deviation of welding while increasing the welding efficiency of the HEAT welding.

As described above, welding wire straightener 21 in each of welding robots 11 and 91 according to the first exemplary embodiment and the modification of the first exemplary embodiment substantially straightens welding wire 13 projecting from forced power supply tip 15. As a result, in each of welding robots 11 and 91 according to the first exemplary embodiment and the modifications of the first exemplary embodiment, welding wire 13 substantially straight by welding wire straightener 21 can pass through a bendable feeding path (first feeding path 35 and second feeding path 39) and torch neck 87 bent at predetermined bending angle θ and can project from forced power supply tip 15. The positional deviation (target deviation) of the welded portion can be further suppressed even without the insulating guide.

As described above, in at least a part of the feeding path of welding wire 13 from wire supply source 33 (an example of the supply source) to torch 19, manipulator 17 in welding robot 11 according to the first exemplary embodiment executes welding in a posture in which welding wire 13 has a bending angle of less than 180° and a bending radius of 150 mm or more. As a result, welding robot 11 according to the first exemplary embodiment can suppress a decrease in straightness of welding wire 13 in the feeding path during welding.

That is, the flexible conduit (that is, second feeding path 39) is maintained in a state where the bending radius (means a minimum radius of curvature (minimum bending radius) of a curvature circle at a portion bent in a U-shape.) is more than or equal to 150 mm and the bending angle (means a minimum angle (minimum bending angle) of an arc along a curvature circle in a portion bent in a U-shape.) is less than 180° in order to follow the operation of manipulator 17. In addition, when the flexible conduit is bent in, for example, an S-shape, there are at least two U-shaped bent portions having a bending angle of 180°. In such a case, each of the two U-shaped bent portions has a bending radius of 150 mm or more.

As a result, a minimum bending radius of the feeding path of welding robot 11 is 150 mm. That is, welding robot 11 can suppress occurrence of a new bending tendency in welding wire 13 inserted through second feeding path 39 due to the displacement of second feeding path 39 caused by the movement of manipulator 17 during welding, and can suppress the decrease in straightness of welding wire 13.

As described above, welding robot 11 according to the first exemplary embodiment includes second connection portion 43 (an example of the connection portion) connected to the feeding path, and connection unit 37 that fixes second connection portion 43 to manipulator 17. Connection unit 37 has a mechanism (for example, pan bearing 53 or tilt bearing 61) in which connection unit 37 itself rotates. As a result, in welding robot 11 according to the first exemplary embodiment, the length of welding wire 13 in second feeding path 39 can be adjusted by connecting an end of the flexible conduit constituting second feeding path 39 to second connection portion 43 and rotating connection unit 37 itself that fixes second connection portion 43 to manipulator 17 by pan bearing 53 or tilt bearing 61. Accordingly, welding robot 11 can more effectively suppress the bending tendency, twisting, and the like of welding wire 13 in second feeding path 39.

As described above, welding robot 11 according to the first exemplary embodiment includes the bearing mechanism (an example of the mechanism) in which second connection portion 43 connected to the feeding path rotates about the axis of welding wire 13 as the rotation center. As a result, welding robot 11 according to the first exemplary embodiment can release the twisting of welding wire 13 by rotating in rotation direction S about a central axis of the flexible conduit (that is, the axis of welding wire 13). The twisting of welding wire 13 leads to helical curling of the flexible conduit and welding wire 13, and the bending radius of welding wire 13 is reduced. The twisting of welding wire 13 is released, and thus, the bending radii of the flexible conduit and welding wire 13 can be increased. Accordingly, welding robot 11 can maintain the flexible conduit and welding wire 13 at a bending radius of 150 mm or more in entire second feeding path 39 by the rotation of second connection portion 43.

In addition, as described above, in welding robot 91 according to the modification of the first exemplary embodiment, welding wire straightener 21 is provided above torch 19. As a result, welding robot 91 according to the modification of the first exemplary embodiment corrects the bending tendency of welding wire 13 immediately before torch 19. Welding wire 13 straightened to be substantially straight is directly supplied to torch 19. Accordingly, welding wire 13 supplied to forced power supply tip 15 is bent only by torch neck 87. Since welding robot 91 straightens welding wire 13 in nearest torch 19 by welding wire straightener 21, it is possible to further suppress the decrease in straightness of welding wire 13.

In addition, as described above, torch 19 in welding robot 11 according to the first exemplary embodiment includes welding wire feeding motor 31. Welding wire straightener 21 is provided near wire supply source 33 (an example of the supply source) of welding wire 13. As a result, welding robot 11 according to the first exemplary embodiment can stroke welding wire 13 between torch 19 and second feeding path 39 by the forward and backward feeding operations.

In the arc welding control method in which the stroke control is performed, the welding wire is fed backward in a short-circuit period in which a short-circuit occurs, and thus, the amount of feeding of the welding wire fed in the short-circuit period can be decreased. As a result, a short-circuit state can be released in a short time to generate the arc as compared with a case where the welding wire is not fed backward. In addition, in such an arc welding control method, after the short-circuit is released, the welding wire feeding is changed from the backward feeding to the forward feeding to increase a welding current to a predetermined peak current, and thus, the welding wire can be stably burned to form a droplet. As a result, welding robot 11 adopting the arc welding control method can more effectively prevent the popping of welding wire 13 due to the short-circuit for a long time, the disturbance of a short-circuit cycle, and the like, and can realize more stable welding.

In addition, in a case where the welding wire is fed backward, welding robot 11 needs to secure the extra length enabling the deformation of welding wire 13 in an axial direction on the upstream side in the feeding direction of the welding wire as much as welding wire 13 is fed backward. In welding robot 11, welding wire feeding motor 31 provided in torch 19 and welding wire straightener 21 mounted on a rear portion (wire supply source 33 side) of manipulator 17 are connected by the flexible conduit. A rear end of the flexible conduit is connected to welding wire straightener 21 via connection unit 37. As a result, the flexible conduit connecting welding wire feeding motor 31 and connection unit 37 can accommodate (allow) the extra length of welding wire 13 necessary for the backward feeding in second feeding path 39.

In addition, as described above, torch 19 in each of welding robots 11 and 91 according to the first exemplary embodiment and the modification of the first exemplary embodiment has torch neck 87. The bending angle of torch neck 87 is smaller than the bending angle of welding wire 13 in a case where it is assumed that torch neck 87 is not bent (the bending angle of torch neck 87 is 0°). In other words, the bending angle of torch neck 87 is less than an angle at which the welding wire is straightened by welding wire straightener 21 and the curvature of welding wire 13 passing through torch neck 87 is increased. Note that, the "angle at which the curvature of passing welding wire 13 is increased" mentioned here is an angle at which the bending of welding wire 13 straightened by welding wire straightener 21 is increased (that is, the bending angle is increased). As a result, in each of welding robots 11 and 91 according to the first exemplary embodiment and the modification of the first exemplary embodiment, since the bending angle of torch neck 87 is larger than the angle at which the curvature of the passing welding wire 13 is increased, it is possible to project welding wire 13 from the distal end of forced power supply tip 15 while keeping welding wire 13 substantially straight without further bending the welding wire.

Although various exemplary embodiments have been described above with reference to the accompanying drawings, the present disclosure is not limited to such examples. It is apparent that those skilled in the art can conceive various modification examples, correction examples, substitution examples, addition examples, removal examples, and equivalent examples within the scope described in the attached claims, and those examples are understood to be within the technical scope of the present disclosure. In addition, the constituent elements in the above-described various exemplary embodiments may be arbitrarily combined without departing from the gist of the invention.

### INDUSTRIAL APPLICABILITY

The present disclosure is useful as presentation of a welding system that more effectively suppresses a target deviation of a welded portion even though a projecting length of a welding wire is increased.

### REFERENCE MARKS IN THE DRAWINGS

11, 91: welding robot
13: welding wire
15: forced power supply tip
17: manipulator
19: torch
21: welding wire straightener
23: robot
31: welding wire feeding motor
35: first feeding path
37: connection unit
39: second feeding path
41: first connection portion
43: second connection portion
45: third connection portion
53: pan bearing
61: tilt bearing
63: unit body
65: roller bearing
75: plug
87: torch neck

## Claims

1. A welding system comprising:
a tip that biases a welding wire and has a forced power supply mechanism for supplying power to the welding wire at a distal end of the tip;
a torch including the tip at a distal end of the torch, the torch supplying the welding wire toward a welded portion;
an automatic machine that holds the torch; and
a welding wire straightener attached to the automatic machine, the welding wire straightener correcting a bending tendency of the welding wire.

2. The welding system according to Claim 1, wherein the welding wire straightener straightens the welding wire projecting from the tip to be substantially straight.

3. The welding system according to Claim 2, wherein the automatic machine executes welding in a posture in which the welding wire has a bending angle of less than 180° and a bending radius of 150 mm or more in at least a part of a feeding path of the welding wire from a supply source of the welding wire to the torch.

4. The welding system according to Claim 3, further comprising:
a connection portion connected to the feeding path; and
a connection unit that fixes the connection portion to the automatic machine,
wherein the connection unit has a mechanism in which the connection unit itself rotates.

5. The welding system according to Claim 3, wherein a connection portion connected to the feeding path has a mechanism that rotates about an axis of the welding wire.

6. The welding system according to Claim 1 or 2, wherein the welding wire straightener is provided above the torch.

7. The welding system according to any one of Claims 3 to 5, wherein
the torch includes a welding wire feeding motor, and
the welding wire straightener is provided near the supply source of the welding wire.

8. The welding system according to Claim 6, wherein
the torch includes a torch neck, and
a bending angle of the torch neck is smaller than a bending angle of the welding wire in a case where it is assumed that the torch neck is not bent.

9. The welding system according to Claim 7, wherein
the torch includes a torch neck, and
a bending angle of the torch neck is smaller than a bending angle of the welding wire in a case where it is assumed that the torch neck is not bent.

10. The welding system according to Claim 6, wherein
the torch includes a torch neck, and
a bending radius of the torch neck is larger than a bending radius of the welding wire in a case where it is assumed that the torch neck is not bent.

11. The welding system according to Claim 7, wherein
the torch includes a torch neck, and
a bending radius of the torch neck is larger than a bending radius of the welding wire in a case where it is assumed that the torch neck is not bent.
